# NEW EUROPEAN PATENT SPECIFICATION

(11) **EP 1 840 784 B2**
(45) Date of publication and mention of the opposition decision: **20.06.2018**
(45) Mention of the grant of the patent: 22.10.2014
(21) Application number: 05774891.5
(22) Date of filing: 24.08.2005
(51) Int. Cl.: G06F 21/70, G11C 16/02

(54) **SEMICONDUCTOR MEMORY DEVICE**
HALBLEITER-SPEICHERBAUSTEIN
DISPOSITIF MEMOIRE A SEMI-CONDUCTEUR

(30) Priority: 15.11.2004 JP 2004330570
(43) Date of publication of application: 03.10.2007
(73) Proprietor: MegaChips Corporation, Yodogawa-ku Osaka-shi Osaka 532-0003 (JP); Nintendo Co., Ltd., Kyoto 601-8501 (JP)
(72) Inventor: Yamaguchi, Ikuo, Yokohama-shi, Kanagawa 226-0026 (JP); Umezu, Ryuji, Fushimi-ku, Kyoto-shi, Kyoto 612-0844 (JP)
(74) Representative: Winter, Brandl, Fürniss, Hübner, Röss, Kaiser, Polte - Partnerschaft mbB
(86) International application number: PCT/JP2005/015354
(87) International publication number: WO 2006/051639

(56) References cited:
- EP-A1- 1 286 242
- WO-A1-97/44736
- JP-A- 1 270 191
- JP-A- 7 200 287
- JP-A- 8 328 962
- JP-A- 2002 032 268
- US-A- 4 525 599
- US-A- 4 583 196
- US-A- 5 765 197
- US-A- 5 933 854

## Description

### Technical Field

The present invention relates to a semiconductor memory device and, more particularly, to the security of various types of data stored in a semiconductor memory.

### Background Art

An information processing apparatus has been known which includes a semiconductor memory removable therefrom and which operates using data containing a program stored in the semiconductor memory. A variety of mechanisms have been proposed to provide the security of the data stored in this semiconductor memory.

Patent document 1 discloses a technique for scrambling data outputted from a semiconductor memory by the use of key data to provide the security of the data.

Patent document 2 or Patent document 3 discloses a technique of performing a type of encryption by means of a logic circuit (logic) on address data outputted to a semiconductor memory or data outputted from the semiconductor memory to provide the security of the data.
Patent document 1: Japanese Patent Application Laid-Open No. 9-106690
Patent document 2: Japanese Patent Application Laid-Open No. 2001-35171
Patent document 3: Japanese Patent Application Laid-Open No. 7-219852

Patent document 1, however, discloses a security method using a scrambling scheme which is advantageous in high data transfer efficiency but is disadvantageous in generally low strength of security. Patent document 2 or Patent document 3 employs a one-step logic operation by means of the logic circuit, which features fast processing but is disadvantageous in low confidentiality because it is easy to analyze the security method if what logic circuit is used is known.

To improve the confidentiality, it is contemplated to use an encryption scheme such that an inexpensive processing circuit such as a single-chip microcomputer is inserted between the semiconductor memory and the information processing apparatus to process a cryptographic algorithm. The security method employing such an encryption scheme, however, is disadvantageous in low data transfer efficiency although having the advantage of its high strength of security.

Document US 4 583 196 A describes a secure read only memory comprising an address input bus means, an internal address bus means, a data output bus means, a memory cell array means, a reprogrammable address relocation means adapted to receive a signal from said address input bus means, execute instructions to reprogram said reprogrammable address relocation means, generate an actual address signal in response to an attempt to access data stored and in of the memory locations of said memory cell array means, and transmit said actual address signal on said internal address bus means, means for detecting unacceptable sequences of memory location accesses, and access deny means for preventing said memory cell array means from returning a valid data output signal on said data output bus in response to attempt to access data stored in at least a portion of said memory locations of said memory cell array means, following detection of one of said unacceptable sequences. Furthermore, there is provided a scrambler receiving data output signals from the memory cell array and transferring them unchanged to the data output bus under normal operation. If an unacceptable sequence is detected, the scrambler thereafter alters or scrambles signals received from the memory cell array prior to passing those scrambled signals to the data output bus.

It is an object of the present invention to provide a semiconductor memory having a high-level security function and excellent read performance in consideration for a balance between the strength of security and data transfer efficiency.

The object is solved by the features of the independent claims. The dependent claims are directed to preferred embodiments of the invention.

The present invention provides the plurality of operating modes different in security strength, and operates while changing between these operating modes to achieve the semiconductor memory device with enhanced security strength and excellent read performance.

Further, the semiconductor memory device according to the present invention initializes the condition of scrambling processing when in a mode in which encryption is used and security strength is high while operating mainly in a mode in which scrambling is used and security strength is low. This efficiently compensates for the strength of the security in the mode in which the security strength is low, to provide excellent read performance on average for all of the operating modes.

The objects, features, aspects and advantages of the present invention will become more apparent from the following detailed description of the present invention and accompanying drawings.

### Brief Description of Drawings

[Fig. 1] is a general drawing of an information processing apparatus according to embodiments of the present invention;
[Fig. 2] is a circuit block diagram of a semiconductor memory according to a first embodiment;
[Fig. 3] is a specific block diagram of a command decryption circuit;
[Fig. 4] is a specific block diagram of a data scrambling circuit;
[Fig. 5] is a block diagram of a semiconductor memory according to a first example;
[Fig. 6] is a specific block diagram of a command descrambling circuit;
[Fig. 7] is a block diagram of a semiconductor memory according to further embodiments and examples;
[Fig. 8] is a transition diagram of operating modes; and
[Fig. 9] is a diagram showing a memory map in which storage regions are managed depending on the operating modes.

### Best Mode for Carrying Out the Invention

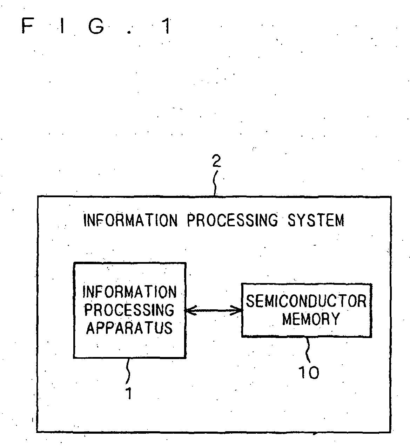

Embodiments according to the present invention will now be described with reference to the drawings. Fig. 1 is a diagram showing a relationship between a semiconductor memory device 10 according to the present invention and an information processing apparatus 1 to which the semiconductor memory device 10 is applied. In the embodiments of the present invention, the semiconductor memory device (hereinafter referred to simply as a "semiconductor memory") 10 is a nonvolatile memory (for example, a ROM, a flash memory or the like) removable from the body of the information processing apparatus 1. The semiconductor memory 10 fixedly stores therein various data including a program, image data, music data and the like the confidentiality of which must be protected from unauthorized duplication or unauthorized reading.

The information processing apparatus 1 includes a CPU and a RAM (not shown), and executes a variety of information processing depending on the data stored in the ROM (not shown) by replacing the semiconductor memory 10. The semiconductor memory 10 and the information processing apparatus (or the information processing apparatus body) 1 constitute an information processing system 2.

### {First Embodiment}

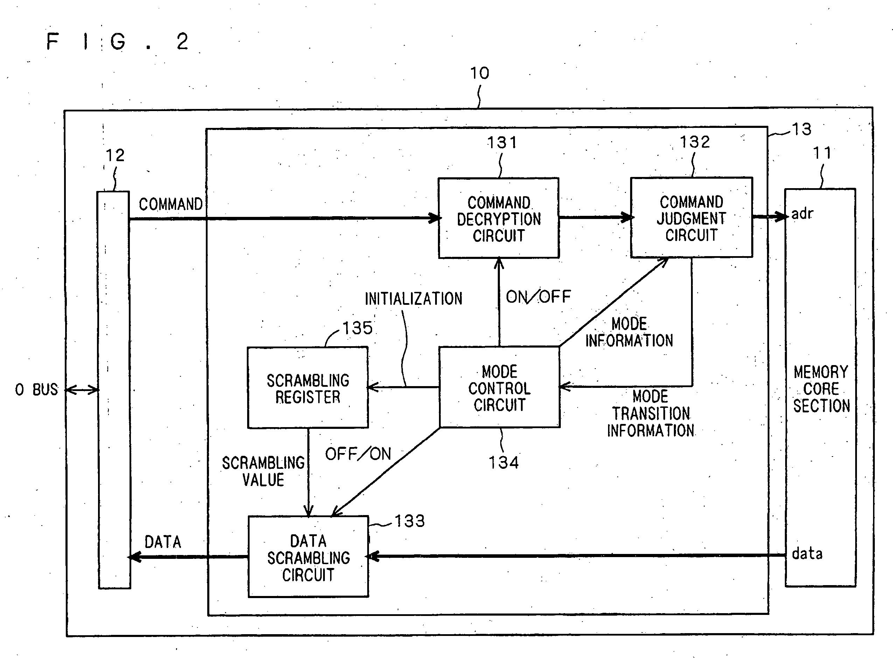

Next, the construction of the semiconductor memory 10 according to a first embodiment will be described. Fig. 2 is a circuit block diagram of the semiconductor memory 10. The semiconductor memory 10 includes a memory core section 11 and an input/output terminal section 12. The semiconductor memory 10 provides the security of data stored in the memory core section 11 by inserting a memory control section 13 between the memory core section 11 and the input/output terminal section 12.

The input/output terminal section 12 includes command input terminals for receiving a command provided from the information processing apparatus 1, and data output terminals for outputting data read from the memory core section 11. The command input terminals receive a command provided from the information processing apparatus 1 through command buses (sometimes referred to generally as address buses). The data output terminals are connected to data buses of the information processing apparatus 1.

When the information processing apparatus 1 is of the type which uses common buses serving as both the command buses and the data buses and which outputs or inputs commands and data by switching therebetween in a time-sharing manner, the command input terminals and the data output terminals are combined (used commonly) in terms of hardware. In this case, if the number of bits of a command and data is greater than the number of terminals, the command or data is provided in a plurality of divided parts.

Herein, the command provided from the information processing apparatus 1 contains an instruction code and address data. Thus, the command input terminals are terminals for receiving the instruction code given through the command buses and the address data given through the address buses. The data output terminals are terminals for outputting data outputted from the memory core section 11 to the data buses.

All or at least one of the command input terminals doubles as all or at least one of the data output terminals. The terminals are used in a time-sharing manner differently at the time of the input of a command and at the time of the output of data. Such a construction can reduce the number of bus lines for connection between the information processing apparatus 1 and the semiconductor memory 10.

The command includes a read command for the information processing apparatus 1 to read the data stored in the memory core section 11, and an operating mode switching command for the information processing apparatus 1 to control the operating modes of the semiconductor memory 10.

The memory core section 11 is a storage region containing a multiplicity of memory cells and the like. An inexpensive mask ROM is used for the memory core section 11, but the memory core section 11 is not limited to this. A nonvolatile memory including a flash memory, an EPROM and the like may be used for the memory core section 11.

The data stored in the memory core section 11 includes various data such as a program, image data, voice data, game data and the like. The memory control section 13 is a circuit for controlling access to the data stored in the memory core section 11, and has the function of ensuring the security of the data.

The memory control section 13 is a circuit for carrying out the access control of the memory core section 11, and has the function of ensuring data security or security.

The memory control section 13 of the embodiment of Fig. 2 is constructed including a command decryption circuit 131, a command judgment circuit 132, a data scrambling circuit 133, a mode control circuit 134, and a scrambling register (hereinafter referred to simply as a "register") 135.

The command decryption circuit 131 is a circuit selectively operative to decrypt a command received from the information processing apparatus 1 or to output the command intactly. The data scrambling circuit 133 is a circuit selectively operative to perform a scrambling process on data outputted from the memory core section 11 or to output the data intactly. Thus, an encryption process is performed on a command provided from the information processing apparatus 1 to the semiconductor memory 10 for the purposes of protecting the confidentiality of the command and consequently controlling access to the semiconductor memory 10. Further, a scrambling process is performed on data to be outputted from the semiconductor memory 10 to the information processing apparatus 1 for the purpose of protecting the confidentiality of the data.

The encryption process, as that term is used in the present invention, does not include the scrambling process (bit manipulation) on address buses and data buses. In contrast with the scrambling process which makes information unintelligible by means of the bit manipulation, the encryption process according to the present invention is the process of encrypting the command itself containing a bit operation on a bit-by-bit basis. For example, an encryption scheme belonging to a secrete key cryptosystem (also referred to as a common key cryptosystem) may be adopted for the encryption process according to the present invention.

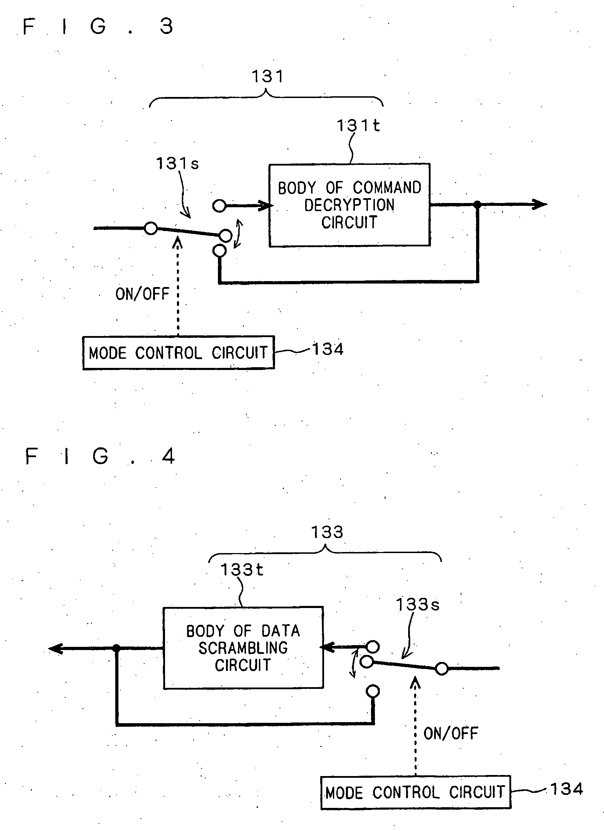

Fig. 3 shows a specific construction of the command decryption circuit 131. The command decryption circuit 131 includes a body 131t of the command decryption circuit and a bus switching circuit 131s provided at its input side. The bus switching circuit 131s is constructed for selection as to whether to output a command through the body 131t of the command decryption circuit or to output the command intactly, in response to a switching control signal provided from the mode control circuit 134.

Specifically, when the switching control signal which turns ON a command decryption function is provided from the mode control circuit 134, the command inputted from the input/output terminal section 12 is provided to the body 131t of the command decryption circuit 131, and the command decryption function is activated (or enabled).

On the other hand, when the switching control signal which turns OFF the command decryption function is provided from the mode control circuit 134, the command inputted from the input/output terminal section 12 is outputted through a bypass line so as to pass intactly, whereby the command decryption function is deactivated (or disabled). Thus, the command decryption circuit 131 is controlled to be ON/OFF by the switching control signal.

A specific construction of the body 131t of the command decryption circuit is such that a circuit for performing a bit operation on one unit of data (for example, one byte or a predetermined number of bytes) is used to perform a computing process (decryption process) which is the reverse of encryption. An example of the circuit for performing the bit operation includes a circuit for performing logic operations on one unit of data (for example, one byte or a predetermined number of bytes) in a plurality of steps by the use of logic circuits (AND, OR, NAND, exclusive-OR and the like). Another example of the command decryption circuit 131 may be a circuit which performs a simple decryption algorithm computation by the use of a small-scale CPU such as a single-chip microcomputer.

Fig. 4 shows a specific construction of the data scrambling circuit 133. The data scrambling circuit 133 includes a body 133t of the data scrambling circuit and a bus switching circuit 133s provided at its input side. The bus switching circuit 133s is constructed for selection as to whether to output data read from the memory core section 11 through the data scrambling circuit 133 or to output the read data intactly, in response to a switching control signal provided from the mode control circuit 134.

That is, when the switching control signal which turns ON a data scrambling function is inputted from the mode control circuit 134, the data read from the memory core section 11 is outputted through the body 133t of the data scrambling circuit 133. When the switching control signal which turns OFF the data scrambling function is inputted, the data read from the memory core section 11 is outputted through a bypass line so as to pass intactly, whereby the data scrambling function is deactivated (or disabled). Thus, the data scrambling circuit 133 is controlled to be ON/OFF by the switching control signal.

A specific example of the body 133t of the data scrambling circuit 133 may be a circuit which performs bit operation such as bit replacement, bit manipulation, or bit inversion, in accordance with certain regularity.

The command judgment circuit 132 judges the descriptions of a command provided from the information processing apparatus 1 to output data for transition of the operating modes. When the command is a data read command for reading data stored in the memory core section 11, the command judgment circuit 132 provides a read control signal decrypted by the command decryption circuit 131 to the memory core section 11, and provides the command given through the command decryption circuit 131 as a read address to the memory core section 11.

Additionally, the command judgment circuit 132 judges whether or not the decrypted command is a command for switching control of the operating modes to be described later, and provides it as mode transition information to the mode control circuit 134. The command which gives rise to the mode transition information is generated by the CPU of the information processing apparatus 1. The generation of the command which gives rise to the mode transition information is timed uniquely by the CPU of the information processing apparatus 1 and is responsive to the read of part of the program stored in the memory core section 11.

The mode control circuit 134 effects the ON/OFF control of the command decryption circuit 131 and/or the data scrambling circuit 133 in accordance with the result of the judgment of the command by the command judgment circuit 132 to control the switching of the operating modes of the semiconductor memory 10, consequently effecting the access control of the memory core section 11. The mode control circuit 134 also has the function of performing an initialization process on the scrambling register (hereinafter referred to simply as a "register") 135, and sets a scrambling value prior to the scrambling operation of the data scrambling circuit 133.

That is, the semiconductor memory 10 is switchable between two operating modes shown in Table 1.

**[Table 1]**

| Mode | Command Decryption Circuit | Data Scrambling Circuit |
|---|---|---|
| First Mode | ON | OFF |
| Second Mode | OFF | ON |

These two operating modes are controlled by the command provided from the information processing apparatus 1 as described above. When the command for switching control of the operating modes is provided from the information processing apparatus 1, the command judgment circuit 132 judges the command. When the command judgment circuit 132 judges that the command is the command for switching control of the operating modes, the command judgment circuit 132 provides the mode transition information to the mode control circuit 134. Specifically, the command judgment circuit 132 judges whether the command is a command specifying the transition to the first mode shown in Table 1 or a command for specifying the transition to the second mode, to provide the result of judgment as the mode transition information to the mode control circuit 134.

The mode control circuit 134 effects the switching control of the operating modes in response to the mode transition information provided from the command judgment circuit 132. For example, when the mode transition information specifying a change to the first mode is provided, the mode control circuit 134 provides an ON control signal to the command decryption circuit 131 to enable the command decryption function, and provides an OFF control signal to the data scrambling circuit 133 to disable the data scrambling function. This places the command decryption circuit 131 into an operating mode in which the decryption process is executed, and places the data scrambling circuit 133 into an operating mode in which the scrambling process is not executed.

On the other hand, when the mode transition information specifying a change to the second mode is provided, the mode control circuit 134 provides an OFF control signal to the command decryption circuit 131, and provides an ON control signal to the data scrambling circuit 133. This places the command decryption circuit 131 into an operating mode in which the decryption process is not executed, and places the data scrambling circuit 133 into an operating mode in which the scrambling process is executed.

Upon receipt of the mode transition information, the mode control circuit 134 provides mode information to the command judgment circuit 132. Based on the mode information, the command judgment circuit 132 judges the type of the command provided from the command decryption circuit 131. In other words, the command judgment circuit 132 judges the type of the command by reference to the mode information because the command to be judged (that is, the command provided from the information processing apparatus 1) has different command meanings depending on the operating modes if the same code is given.

Next, operations in the respective modes and the mode switching operation will be described. First, the operation of the semiconductor memory 10 (substantially, the memory control section 13) in the first mode will be described.

At the turning-on of the information processing apparatus 1, the semiconductor memory 10 is set so as to operate in the first mode. Thus, when power is turned on, the mode control circuit 134 provides the ON control signal to the command decryption circuit 131, and provides the OFF control signal to the data scrambling circuit 133.

Then, when an encrypted command is provided from the information processing apparatus 1 to the semiconductor memory 10, the command is provided through the input/output terminal section 12 to the command decryption circuit 131. At this time, the command decryption circuit 131 is controlled to be ON because the semiconductor memory 10 operates in the first mode. Therefore, the encrypted command is subjected to the decryption process in the command decryption circuit 131, and the decrypted command is provided to the command judgment circuit 132.

The command judgment circuit 132 extracts an instruction code and an address code from the decrypted command to provide a read signal and address data to the memory core section 11. In response to this, data is read from the memory core section 11. The data read from the memory core section 11 is provided to the data scrambling circuit 133.

At this time, the data scrambling circuit 133 is controlled to be OFF because the semiconductor memory 10 operates in the first mode. Therefore, the data read from the memory core section 11 bypasses the scrambling circuit 133 and is outputted from the input/output terminal section 12. The data read from the memory core section 11 is then read into the information processing apparatus 1 through the input/output terminal section 12 and the data buses (not shown).

The information processing apparatus 1 executes a process corresponding to the read data. Subsequently, the information processing apparatus 1 generates commands sequentially and read data, whereby similar operations are repeated.

Next, description will be given on an instance wherein the semiconductor memory 10 operating in the first mode is switched to the second mode, upon receipt of an input of a command for mode switching to the second mode.

Prior to the generation of the command for mode switching to the second mode, the information processing apparatus 1 generates an encrypted command containing control data for initializing the register 135 and a descrambling value to provide the encrypted command to the semiconductor memory 10.

This command is provided through the input/output terminal section 12 to the command decryption circuit 131. This encrypted command is decrypted by the command decryption circuit 131, and the command judgment circuit 132 judges that this command is the command for initializing the register 135 (for specifying the setting of the descrambling value). The initializing command and the descrambling value are provided to the register 135 by the mode control circuit 134, and the descrambling value is loaded into the register 135.

Subsequently, when the information processing apparatus 1 outputs the command for mode switching to the second mode, this command is provided through the input/output terminal section 12 to the command decryption circuit 131. At this time, the command decryption circuit 131 is controlled to be ON and is enabled because the semiconductor memory 10 operates in the first mode. Therefore, this command is decrypted in the command decryption circuit 131, and the decrypted command is provided to the command judgment circuit 132.

Because the mode information currently given from the mode control circuit 134 indicates the first mode, the command judgment circuit 132 judges that the inputted command is the command for mode switching to the second mode to provide the mode transition information about the transition to the second mode to the mode control circuit 134.

The mode control circuit 134 accordingly controls the command decryption circuit 131 to be OFF and controls the data scrambling circuit 133 to be ON. Thus, the mode switching to the second mode is done. Also, the mode control circuit 134 loads the data about the scrambling value into the register 135 to define the scrambling regularity of the data scrambling circuit 133.

Next, the operation of the semiconductor memory 10 in the second mode will be described. In the second mode, the information processing apparatus 1 generates an unencrypted command to provide the unencrypted command to the semiconductor memory 10. The command in this case principally represents a read address for the memory core section 11.

At this time, the command provided from the information processing apparatus 1 bypasses the command decryption circuit 131 (that is, is not decrypted) and is provided to the command judgment circuit 132 because the command decryption circuit 131 is controlled to be OFF (disabled). In response to this, the command judgment circuit 132 extracts an instruction code (a read instruction or a read signal) and address data from the command to provide the instruction code and the address data to the memory core section 11. Thus, data in an addressed memory region are sequentially read from the memory core section 11.

The data read from the memory core section 11 is provided to the data scrambling circuit 133. At this time, the data scrambling circuit 133 is controlled to be ON (enabled) because the memory control section 13 operates in the second mode. Therefore, the data read from the memory core section 11 is subjected to the scrambling process by the data scrambling circuit 133. After the scrambling, the read data is outputted through the input/output terminal section 12 and the data buses to the information processing apparatus 1.

The information processing apparatus 1 executes information processing corresponding to the read data (e.g., decryption process which is the reverse of encryption).

Subsequently, the information processing apparatus 1 generates unencrypted commands sequentially, whereby the above-described operation is repeated, that is, the operation in which the commands are provided to the command judgment circuit 132 without being decrypted, and the data read from the memory core section 11 is outputted to the information processing apparatus 1 after being subjected to the scrambling process.

Specifically, the data read from the semiconductor memory 10 in the second mode is outputted as currently meaningless data because the data stored in the memory core section 11 is scrambled by the data scrambling circuit 133. Thus, the data stored in the memory core section 11 is protected if unauthorized read is done.

The information processing apparatus 1, however, uses data obtained by descrambling the above-mentioned data based on the scrambling regularity in the data scrambling circuit 133 because the regularity is known.

Next, description will be given on an instance wherein the semiconductor memory 10 operating in the second mode is switched to the first mode.

The information processing apparatus 1 generates a command for mode switching to the first mode to provide the command for mode switching to the first mode to the semiconductor memory 10. This command is an unencrypted command, and is provided through the input/output terminal section 12 to the command decryption circuit 131.

At this time, the command decryption circuit 131 is controlled to be OFF because the semiconductor memory 10 operates in the second mode. Therefore, the command bypasses the command decryption circuit 131 (that is, the command is not decrypted but remains in its current data form) and is provided to the command judgment circuit 132.

The command judgment circuit 132 judges that the inputted command is the command for mode switching to the first mode to provide the mode transition information about the transition to the first mode to the mode control circuit 134. The mode control circuit 134 accordingly switches ON the command decryption circuit 131 and switches OFF the data scrambling circuit 133. Thus, the mode switching to the first mode is done.

The operation of the semiconductor memory 10 according to the first embodiment, that is, the access control of the memory core section 11 by the memory control section 13 is carried out as described above.

In the first embodiment, the access control of the semiconductor memory 10 is effected while a mode change (or a mode transition) is made between the first mode in which the security strength is high as the command is encrypted and the second mode in which the data is scrambled and the security strength is low.

Thus, a combination of the presence/absence of command encryption and the presence/absence of data scrambling, that is, a data security method changes with time. This makes it difficult to analyze the command types and data scrambling regularity, to provide the security of the data stored in the memory core section 11.

Further, the scrambling process, in which the data is made jumbled by means of the bit manipulation (that is, the replacement of bit positions on the data buses), requires a slight processing burden and short time for the scrambling process. The decryption process, on the other hand, requires processing time but improves the security strength.

Thus, combining the first mode in which the security strength is high but the processing burden is heavy and the second mode in which the security strength is low but the processing burden is slight achieves improvements in processing speed while the security strength is maintained high.

Additionally, difficulties in analyzing a security system are provided to improve the confidentiality of the data stored in the memory core section 11, thereby effectively preventing unauthorized duplication thereof.

### {First example}

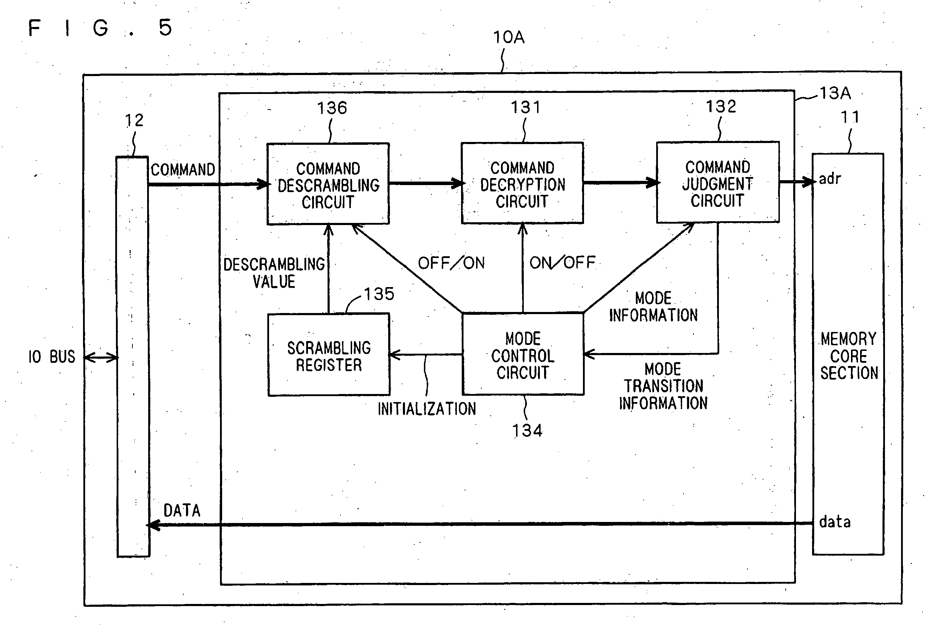

Next, the construction of a semiconductor memory 10A according to a first example will be described. Fig. 5 is a block diagram of the semiconductor memory 10A. Components similar to those of the first embodiment will not be described.

The semiconductor memory 10A according to the first example differs from the first embodiment in that a memory control section 13A includes a command descrambling circuit 136 in place of the data scrambling circuit 133. Specifically, the first example is constructed so that the data read from the memory core section 11 is not subjected to the bit manipulation, but a command provided from the information processing apparatus 1 is decrypted if the command is encrypted and is subjected to a descrambling process if the command is scrambled. The descrambling value is set in the register 135.

The command descrambling circuit 136 is a circuit for performing the descrambling process on a command provided from the information processing apparatus 1. Thus, a command is subjected to the scrambling process and/or the encryption process when the information processing apparatus 1 provides the command to the semiconductor memory 10.

the command descrambling circuit 136 performs a bit manipulation process so as to convert the command subjected to the scrambling process back into its original command, based on the descrambling value loaded in the register 135. The descrambling value serves as reference data for causing the reverse bit manipulation based on the regularity of the scrambling process of the information processing apparatus 1.

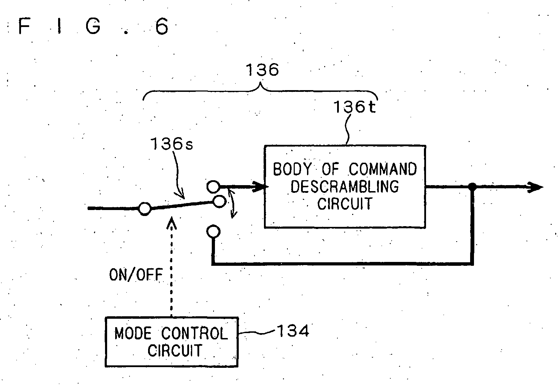

Fig. 6 shows a specific construction of the command descrambling circuit 136. The command descrambling circuit 136 includes a body 136t of the command descrambling circuit and a bus switching circuit 136s provided at its input side.

The bus switching circuit 136s receives a switching control signal which turns ON a command descrambling function from the mode control circuit 134 to turn ON the command descrambling circuit 136 (enables the descrambling function), and receives the switching control signal which turns OFF the command descrambling function to turn OFF the command descrambling circuit 136 (disables the descrambling function).

Thus, when the command descrambling circuit 136 is ON (or the descrambling function is enabled), the command (encrypted command) inputted through the input/output terminal section 12 is descrambled by the command descrambling circuit 136. When the command descrambling circuit 136 is OFF (or the descrambling function is disabled), the command is provided to the command decryption circuit 131 on the next stage through a bypass line so as to pass intactly without being descrambled.

That is, the semiconductor memory 10A according to the this embodiment is switchable between the two operating modes shown in Table 2.

**[Table 2]**

| Mode | Command Descrambling Circuit | Command Decryption Circuit |
|---|---|---|
| First Mode | OFF | ON |
| Second Mode | ON | OFF |

Next, operations in the respective modes and the mode switching operation will be described. First, the operation of the semiconductor memory 10A in the first mode will be described.

At the turning-on of the information processing apparatus 1, the semiconductor memory 10A is set so as to operate in the first mode. Thus, when power is turned on, the mode control circuit 134 provides the ON control signal to the command decryption circuit 131, and provides the OFF control signal to the command descrambling circuit 136.

Then, when an encrypted command is provided from the information processing apparatus 1 to the semiconductor memory 10A, the command is provided through the input/output terminal section 12 to the command descrambling circuit 136.

In the first mode, however, the command bypasses the command descrambling circuit 136 and is provided to the command decryption circuit 131 because the command descrambling circuit 136 is controlled to be OFF. At this time, the command is subjected to the decryption process in the command decryption circuit 131 because the command decryption circuit 131 is controlled to be ON.

The decrypted command is provided to the command judgment circuit 132. The command judgment circuit 132 extracts an instruction code and an address code from the decrypted command to provide a read signal and address data to the memory core section 11. In response to this, data is read from the memory core section 11, and is outputted through the input/output terminal section 12 and the data buses to the information processing apparatus 1. The information processing apparatus 1 executes information processing in accordance with the read data.

Next, description will be given on an instance wherein the semiconductor memory 10A operating in the first mode is switched to the second mode.

Prior to the generation of the command for mode switching to the second mode, the information processing apparatus 1 generates an encrypted command containing control data for initializing the register 135 and the descrambling value to provide the encrypted command to the semiconductor memory 10A. This command is provided through the input/output terminal section 12 and the command descrambling circuit 136 to the command decryption circuit 131.

This encrypted command is decrypted by the command decryption circuit 131 to be judged, by the command judgment circuit 132, the command for initializing the register 135 (for specifying the setting of the descrambling value). The initializing command and the descrambling value are provided to the register 135 by the mode control circuit 134, and the descrambling value is loaded into the register 135.

Subsequently, the information processing apparatus 1 generates the command for mode switching to the second mode to provide the command for mode switching to the second mode to the semiconductor memory 10A. This command is provided through the input/output terminal section 12 to the command descrambling circuit 136. In the first mode, the command bypasses the body 136t of the command descrambling circuit 136 and is provided to the command decryption circuit 131 because the command descrambling circuit 136 is controlled to be OFF. Then, the command is decrypted by the command decryption circuit 131, and the decrypted command is provided to the command judgment circuit 132.

The command judgment circuit 132 judges that the provided command is the command for mode switching to the second mode to provide the mode transition information about the transition to the second mode to the mode control circuit 134. In response to the mode switching command, the mode control circuit 134 controls the command descrambling circuit 136 to be ON, and controls the command decryption circuit 131 to be OFF, thereby switching the mode to the second mode. This causes the semiconductor memory 10A to subsequently operate in the second mode.

Next, the information processing apparatus 1 generates an unencrypted and scrambled command to provide the command to the semiconductor memory 10A. This scrambled command is provided through the input/output terminal section 12 to the command descrambling circuit 136. In this second mode, the command descrambling circuit 136 is controlled to be ON, and the command decryption circuit 131 is controlled to be OFF. Therefore, the scrambled command is subjected to the descrambling process by the command descrambling circuit 136. Thereafter, the command bypasses the body 131t of the command decryption circuit 131, and is provided to the command judgement circuit 132.

The command judgment circuit 132 obtains an instruction code and an address code from the command to provide a read signal and address data to the memory core section 11. In response to this, data is outputted from the memory core section 11.

The data outputted from the memory core section 11 is outputted through the input/output terminal section 12 and the data buses to the information processing apparatus 1. The information processing apparatus 1 executes information processing in accordance with the read data. Subsequently, the information processing apparatus 1 generates commands sequentially, whereby the operation described above, that is, the above said command being subjected to the descrambling process followed by being provided to the command judgment circuit 132 without decryption and reading out data fromef the memory core section 11, is repeated.

Next, description will be given on an instance wherein the semiconductor memory 10A operating in the second mode is switched to the first mode.

When the information processing apparatus 1 generates the command (scrambled command) for mode switching to the first mode to provide the command for mode switching to the first mode to the semiconductor memory 10A, this command is provided through the input/output terminal section 12 to the command descrambling circuit 136. At this time, the command descrambling circuit 136 is controlled to be ON and the command decryption circuit 131 is controlled to be OFF because the semiconductor memory 10A is in the second mode. Therefore, the scrambled command is descrambled by the descrambling circuit 136. Thereafter, this command bypasses the body 131t of the command decryption circuit 131 and is provided to the command judgment circuit 132.

The command judgment circuit 132 judges that the inputted command is the command for mode switching to the first mode to provide the mode transition information about the transition to the first mode to the mode control circuit 134. The mode control circuit 134 accordingly controls the command descrambling circuit 136 to be OFF, and controls the command decryption circuit 131 to be ON. Thus, the mode of the memory control section 13A is switched to the first mode.

The operation of the semiconductor memory 10A according to the first example, that is, the access control of the memory core section 11 by the memory control section 13A is carried out as described above. In the first example, the access control of the memory core section 11 is effected while a mode change (or a mode transition) is made between the first mode in which the security strength is high as the command is encrypted and the second mode in which the command is scrambled and the security strength is low.

Thus, a command security method using a combination of the presence/absence of command encryption and the presence/absence of command descrambling changes with time. This makes it difficult to analyze the command types and command descrambling regularity, to provide the security of the data stored in the memory core section 11.

Further, combining the first mode in which the security strength is high but the processing burden is heavy and the second mode in which the security strength is low but the processing burden is slight achieves improvements in processing speed while the security strength is maintained high.

### {Second Embodiment}

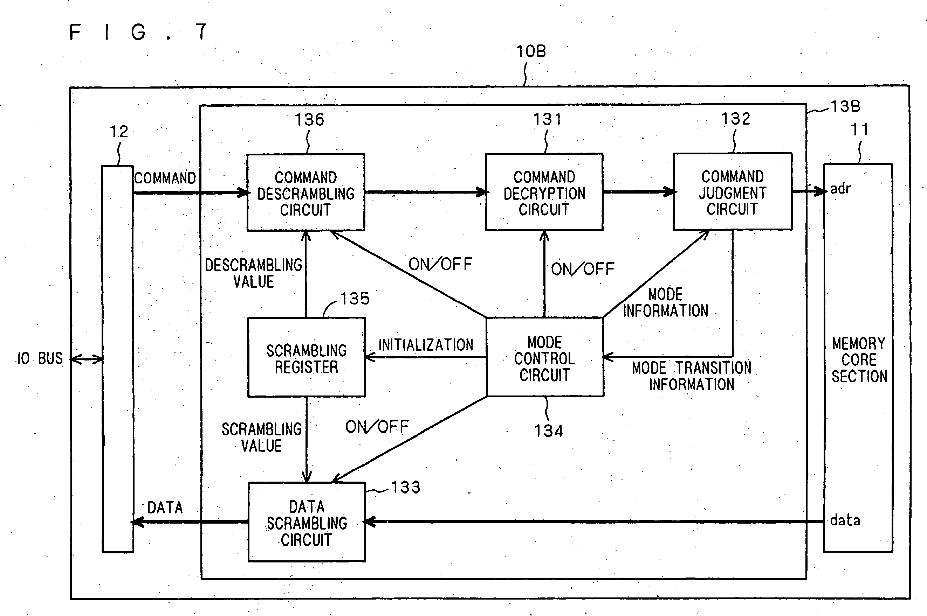

Next, the construction of a semiconductor memory 10B according to a second embodiment will be described. Fig. 7 is a circuit block diagram of the semiconductor memory 10B. Components similar to those of the first embodiment and the first example will not be described.

The semiconductor memory 10B according to the second embodiment is constructed such that the first embodiment and the first example are combined together. Specifically, the memory control section 13 includes both the data scrambling circuit 133 and the command descrambling circuit 136.

The semiconductor memory 10B according to the second embodiment is operable while switching between the two operating modes shown in Table 3. That is, in the first mode, the command descrambling circuit 136 is controlled to be OFF, the command decryption circuit 131 is controlled to be ON, and the data scrambling circuit 133 is controlled to be either ON or OFF. In the second mode, the command descrambling circuit 136 is controlled to be OFF, the command decryption circuit 131 is controlled to be either ON or OFF, and the data scrambling circuit 133 is controlled to be ON.

**[Table 3]**

| Mode | Command Descrambling Circuit | Command Decryption Circuit | Data Scrambling Circuit |
|---|---|---|---|
| First Mode | OFF | ON | ON/OFF |
| Second Mode | OFF | ON/OFF | ON |

Also in this embodiment, the semiconductor memory 10B is set so as to operate in the first mode at the turning-on of the information processing apparatus 1. Thus, when power is turned on, the mode control circuit 134 provides the ON control signal to the command decryption circuit 131, provides the OFF control signal to the command descrambling circuit 136, and provides the ON control signal to the data scrambling circuit 133.

Then, when an encrypted command is provided from the information processing apparatus 1 to the semiconductor memory 10B, the command bypasses the body 131t of the command descrambling circuit 131, and is subjected to the decryption process in the command decryption circuit 131. Thereafter, the command is provided to the command judgment circuit 132.

The command judgment circuit 132 extracts a read signal and address data from the decrypted command to provide the read signal and the address data to the memory core section 11. In response to this, data stored at a given address is read from the memory core section 11. The read data is outputted to the information processing apparatus 1 after being subjected to the scrambling process in the data scrambling circuit 133 (or intactly without being subjected to the scrambling process if the data scrambling circuit 133 is controlled to be OFF).

When the semiconductor memory 10B receives the command for mode switching to the second mode from the information processing apparatus 1 while operating in the first mode, the mode control circuit 134 controls the command descrambling circuit 136 to be OFF and controls the data scrambling circuit 133 to be ON, thereby switching to the second mode.

In the second mode, the command decryption circuit 131 is turned either ON or OFF. Whether to turn ON or OFF the command decryption circuit 131 is controlled by a program (a command stored at an address) stored in the memory core section 11.

On the other hand, when the semiconductor memory 10B operates in the second mode, the command provided from the information processing apparatus 1 bypasses the body 136t of the command descrambling circuit 136, and is provided to the command decryption circuit 131. This command is provided to the command judgment circuit 132 after being subjected to the decryption process (or directly without being subjected to the decryption process).

The command judgment circuit 132 extracts a read signal and address data from the command to provide a read address to the memory core section 11. In response to this, data stored in a storage region of the memory core section 11 specified by the read address are sequentially read. The read data is scrambled by the data scrambling circuit 133, and is then outputted to the information processing apparatus 1.

When the command for mode switching to the first mode is provided from the information processing apparatus 1 during the operation in the second mode, the mode control circuit 134 controls the command descrambling circuit 136 to be OFF, controls the command decryption circuit 131 to be ON, and controls the data scrambling circuit 133 to be either ON or OFF.

Also in the second embodiment, the read operation of the semiconductor memory 10B is carried out while a mode change (or a mode transition) is made between the first mode in which the security strength is high as the command is encrypted and the second mode in which the data is scrambled and the security strength is low. Thus, a security method for the command and data (that is, whether to need decryption of the command and the presence/absence of data scrambling) changes with time. This makes it difficult to analyze the command and data.

Further, combining the first mode in which the security strength is high but the processing burden is heavy and the second mode in which the security strength is low but the processing burden is slight achieves improvements in processing speed while the security strength is maintained high.

Further, because of the individual selective adoption of the data scrambling process in the first mode and the command decryption process in the second mode, the time when the data scrambling and the command decryption processes are performed is unintelligible even in the same mode. This makes it more difficult to analyze the circuits in the sections.

In the second mode, the command descrambling circuit 136 may be ON and the data scrambling circuit 133 may be OFF. That is, similar effects are produced when the relation between ON and OFF of the two circuits 136 and 133 shown in Table 3 is reversed.

The construction of the semiconductor memory 10 according to examples and embodiments below is similar to the circuit construction of the semiconductor memory 10B of the second embodiment shown in Fig. 7, but differs only in control method in the operating modes. Thus, the details of the operation of the semiconductor memory 10B will be described in the following embodiments and examples.

### {Third Embodiment}

The semiconductor memory 10B according to the fourth embodiment is operable while switching between the two operating modes as shown in Table 4. This embodiment is similar to the second embodiment except that the command descrambling circuit 136 is controlled to be ON in the second mode.

**[Table 4]**

| Mode | Command Descrambling Circuit | Command Decryption Circuit | Data Scrambling Circuit |
|---|---|---|---|
| First Mode | OFF | ON | ON/OFF |
| Second Mode | ON | ON/OFF | ON |

Specifically, in the first mode according to the third embodiment, the command descrambling circuit 136 is turned OFF, the command decryption circuit 131 is turned ON, and the data scrambling circuit 133 is turned either ON or OFF. A command for such control is provided from the information processing apparatus 1 to the semiconductor memory 10B, and control is effected as in the first mode of Table 4 by the cooperative actions of the command judgment circuit 132 and the mode control circuit 134.

For mode switching to the second mode, on the other hand, a command for turning ON the command descrambling circuit 136, for turning ON or OFF the command decryption circuit 131 and for turning ON the data scrambling circuit 133 is provided from the information processing apparatus 1, and control is effected as in the second mode of Table 4 by the cooperative actions of the command judgment circuit 132 and the mode control circuit 134.

In the first mode in which the security strength is high according to the third embodiment, the command is encrypted, and the data is scrambled on some occasions and is not on other occasions. In the second mode in which the security strength is low, the command and data are scrambled, and the command is encrypted on some occasions and is not on other occasions. Further, the access control of the memory core section 11 is effected while a mode change is made between the first mode and the second mode. This makes it difficult to analyze the scrambling or descrambling regularity and the command, to provide the security of the data stored in the semiconductor memory 10B.

### {Second example}

The semiconductor memory 10B according to the second example is operable while switching between the two operating modes as shown in Table 5. In the first mode, the command descrambling circuit 136 is controlled to be either ON or OFF, and the command decryption circuit 131 and the data scrambling circuit 133 are controlled to be ON. In the second mode, the command descrambling circuit 136 and the data scrambling circuit 133 are controlled to be ON, and the command decryption circuit 131 is controlled to be either ON or OFF.

**[Table 5]**

| Mode | Command Descrambling Circuit | Command Decryption Circuit | Data Scrambling Circuit |
|---|---|---|---|
| First Mode | ON/OFF | ON | ON |
| Second Mode | ON | ON/OFF | ON |

Also in the second example, the semiconductor memory 10 is operated while a mode change is made between the first mode in which the security strength is high as the command is encrypted and the data is scrambled and the second mode in which the command and data are scrambled and the security strength is lower than that of the first mode.

### {Third example}

The semiconductor memory 10 according to the third example is operable while switching between the two operating modes as shown in Table 6, and is similar to the second example except that the data scrambling circuit 133 is controlled to be OFF in the first mode, and will not be described in detail.

**[Table 6]**

| Mode | Command Descrambling Circuit | Command Decryption Circuit | Data Scrambling Circuit |
|---|---|---|---|
| First Mode | ON/OFF | ON | OFF |
| Second Mode | ON | ON/OFF | ON |

Also in the third example, the semiconductor memory 10 is operated while a mode change is made between the first mode in which the security strength is high as the command is encrypted and the second mode in which the command and data are scrambled and the security strength is lower than that of the first mode.

In the embodiments and examples described above, the access control of the semiconductor memory 10B is effected while the mode change is made between the first mode in which the security strength is high and the second mode in which the security strength is low. Thus, a security method for the command and data changes with time. This makes it difficult to analyze the command and data.

Further, the scrambling process, which is a method of making the data jumbled by means of the bit operation or the bit manipulation, requires a slight processing burden. Combining the first mode in which the security strength is high but the processing burden is heavy and the second mode in which the security strength is low but the processing burden is slight achieves improvements in processing speed while the security strength is maintained high.

The embodiments and examples described above may provide a variety of patterns of the operating modes by controlling the command decryption circuit 131 to be either ON or OFF in the second mode. It is, however, preferred to control the command decryption circuit 131 to be OFF in order to reduce the processing burden in the second mode as discussed above.

### {Other Examples}

Functions to be described below may be added to the semiconductor memory 10 according to the present invention to enhance the security of data.

### <1. Initialization Process for Scrambling>

The mode control circuit 134 is adapted to update the value stored in the register 135 during the operation in the first mode in which the security strength is high. Specifically, the value stored in the register 135 is adopted as the descrambling value for determining the descrambling regularity in the case where the command descrambling circuit 136 performs the command descrambling process, and also the scrambling value for determining the scrambling regularity in the case where the data scrambling circuit 133 performs the data scrambling process. This value (scrambling value or descrambling value) is made settable not only at the turning-on of the information processing apparatus 1 but also during the first mode by program processing.

Specifically, the command descrambling circuit 136 performs a bit manipulation (exclusive-OR operation or the like) on the descrambling value provided from the register 135 and the command provided from the information processing apparatus 1. The data scrambling circuit 133 performs a bit manipulation (exclusive-OR operation or the like) on the scrambling value provided from the register 135 and the data read from the memory core section 11.

Thus, changing the setting of the register 135 allows a change in command input relationship or in data output relationship. This enhances the security strength even in the scrambling process which is lower in security strength than the encryption process.

In this example as described above, even if the structure of a scrambling circuit constituting the command descrambling circuit 136 or the data scrambling circuit 133 comes to light, it is impossible to analyze the regularity of the command descrambling and/or the data scrambling without analyzing the time when the command descrambling value and/or the data scrambling value is changed. This makes the security analysis more difficult.

Thus, even if the circuit structure of the command descrambling circuit 136 or the data scrambling circuit 133 is analyzed, the unauthorized read of the data stored in the semiconductor memory 10 requires the analysis of the time when the descrambling value or the descrambling value is generated in the first mode. This compensates for the low security strength in the second mode.

### <2. Abnormal Operating Mode>

Next, operation in a third mode will be described. As mentioned above, the decryption process or the descrambling process is executed on the command provided from the information processing apparatus 1 in the first mode and in the second mode. If a proper command, that is, a command generated using an encryption algorithm or a scrambling algorithm synchronized with the decryption algorithm or the descrambling algorithm of the semiconductor memory 10 is provided, the command judgment circuit 132 can properly judge the descriptions of the command.

On the contrary, if a command subjected to an unsynchronized unauthorized encryption process or scrambling process is received, the command judgment circuit 132 judges that the command after the decryption process or the descrambling process as an abnormal command: When the command itself is unauthorized even if the encryption process or the scrambling process is performed properly, the command is judged as an abnormal command.

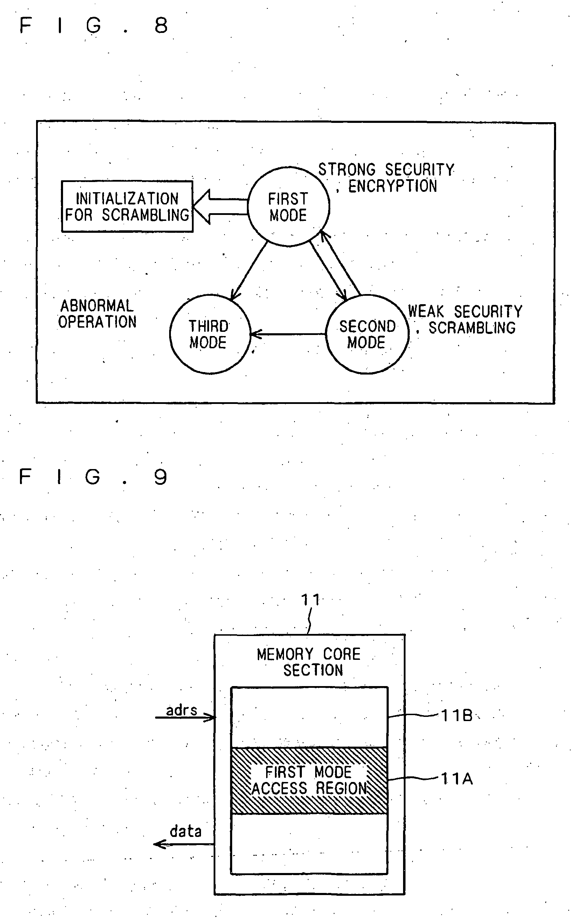

When the command is judged as abnormal, the command judgment circuit 132 changes the mode of the semiconductor memory 10B to the third mode which is the abnormal operating mode. After the transition to the third mode, the command judgment circuit 132 effects control so as to inhibit the process of accessing the memory core section 11. Fig. 8 shows a relationship between the first to third modes.

Once having changed to the third mode, the semiconductor memory 10 (or 10A or 10B) is not able to make a transition to the other modes. The command judgment circuit 132 inhibits access to the memory core section 11, and does not generate the mode transition information about the transition to the other modes.

Therefore, when the command subjected to the unauthorized encryption process (or the unauthorized command) or the unauthorized scrambling process is provided to the semiconductor memory 10, the semiconductor memory 10 immediately makes a transition to the third mode, and subsequently access to the memory core section 11 is inhibited. This enhances the security strength against unauthorized acts to reduce the observability of signals, thereby making the unauthorized read of the data more difficult.

### <3. Control Mainly Using Second Mode>

Although the semiconductor memories 10, 10A and 10B according to the examples have the plurality of operating modes as described above, the information processing apparatus 1 effects control so that the semiconductor memories 10, 10A and 10B operate mainly in the second mode in order to balance the security strength and performance. A command may be provided to the semiconductor memory 10 for transition to the first mode at predetermined time intervals or after a lapse of time specified by an application program operating in the information processing apparatus 1.

In other words, setting the operating time of the second mode longer than that of the first mode improves the performance of the information processing apparatus 1. Making a transition to the first mode in which the security strength is high at a certain timing enhances the security strength and initializes the scrambling process whereby the security strength after the transition back to the second mode is reinforced. This maintains a relatively high security strength and provides a relatively short read time on average for all operating times of the information processing apparatus 1.

### <4. Management of Memory Regions Depending on Operating Modes>

The semiconductor memories 10, 10A and 10B according to the embodiments and examples of the present invention have the plurality of operating modes corresponding to different security levels as mentioned above. Additionally, different memory regions (or spaces) accessible depending on the modes may be set.

Fig. 9 shows storage regions of the memory core section 11 in diagrammatic form. An accessible region and an inaccessible region depending on the modes are defined in the memory core section 11. For example, a storage region 11A is a region determined to be accessible only in the first mode, and a storage region 11 B other than the storage region 11A is a region determined to be accessible in all of the modes.

Thus making the storage regions of the memory core section 11 definable as the accessible and inaccessible regions depending on the modes further strengthens the security of important data, for example, by storing the data requiring the highest security in the region 11A.

In the method of managing the storage regions of the memory core section 11 shown in Fig. 9, the storage region 11A accessible in the first mode and the storage region 11B accessible also in other modes are managed in distinction from each other. This is an example, and other types of storage region management are conceivable. For example, the memory core section 11 may be divided into a plurality of storage regions. These storage regions may be independently defined as storage regions accessible in the respective mode. One of the storage regions may be defined as an accessible storage region common to the two modes: the first mode and the second mode.

### <5. Command with Return Condition>

Next, a command with a return condition will be described. The command with the return condition generated by the information processing apparatus 1 is a command for specifying temporarily changing the current operating mode of the semiconductor memory 10 to a different mode and then returning the current operating mode back to the original mode again after a lapse of predetermined time. This command with the return condition is a command, for example, which indicates "changing the current mode (the first mode) to the second mode, and changing to the first mode again after ten seconds" and the like. The command with the return condition contains information about the mode type to which a transition is temporarily made and information specifying the length of time for the transition.

Thus, all of the commands for changing the modes are controlled so as to be accepted and processed only in the first mode having the highest security level. In other words, all of the mode changes are carried out so as to make a transition from the first mode to another mode and then return to the first mode after a lapse of specified time.

### <6. Modifications>

The information processing apparatus 1 to and from which the semiconductor memories 10, 10A and 10B according to the embodiments and examples described hereinabove are attached and removed is applicable specifically to a personal computer, a handheld terminal apparatus such as a PDA, an image processing apparatus, a game apparatus (including portable and stationary types), a portable telephone, and the like. The invention described in this application may be used as a semiconductor memory removable from any of these apparatuses.

A circuit construction in the above-mentioned embodiments and examples is such that the command provided from the information processing apparatus 1 is inputted first to the command descrambling circuit 136 and is inputted then to the command decryption circuit 131. The sequence in which the circuits are connected may be reversed (the construction is such that the command decryption is performed first).

In the above-mentioned embodiments and examples, the command descrambling circuit 136 and the data scrambling circuit 133 share the use of the single register 135. However, individual registers may be provided for the command descrambling circuit 136 and the data scrambling circuit 133, respectively, to independently load the descrambling value and the scrambling value into the individual registers.

The semiconductor memories 10, 10A and 10B are shown as incorporating the memory control section 13 in the above-mentioned embodiments and examples. The memory control section 13, however, need not always be constructed integrally with the memory core section 11. For example, a general-purpose mask ROM may be used in place of the memory core section 11. In such a case, a circuit having a function similar to that of the memory control section 13 of the embodiments of the present invention is added externally in association with the mask ROM. Such a construction can provide the security of the data stored in the general-purpose ROM.

While the invention has been shown and described in detail, the foregoing description is in all aspects illustrative and not restrictive. It is therefore understood that numerous modifications and variations can be devised without departing from the scope of the invention.

## Claims

1. A semiconductor memory device (10, 10B) removably mounted to an information processing apparatus (1), comprising:
a memory core section (11) for storing therein data including a program to be protected, said memory core section (11) including an address input section and a data output section; an input/output terminal section (12) including command input terminals for receiving a command including an instruction code and address data from said information processing apparatus (1), and data output terminals for providing data read from said memory core section (11) to said information processing apparatus (1); and a memory control means (13, 13B) connected between said memory core section (11) and said input/output terminal section (12),
wherein said memory control means (13, 13B) includes:
a command judgment means (132);
a command decryption means (131) comprising a command decryption function, the command decryption means (131) being adapted to decrypt the command provided to said command input terminals and to output the decrypted command to the command judgment means (132), In case the command decryption function is enabled, or to pass the intact command to the command judgment means (132) through a bypass line, in case the decryption function Is disabled;
a scrambling means (133) comprising a data scrambling function, the scrambling means (133) being adapted to scramble the data read from said memory core section (11) and to output the scrambled data to an input/output terminal section (12), in case the data scrambling function is enabled, or to pass the intact data to the input/output terminal section (12) through a bypass line, in case the data scrambling function is disabled;
wherein said command judgment means (132) is adapted to judge whether the command provided from said information processing apparatus (1) is a first command specifying a transition to a first operating mode or a second command specifying a transition to a second operating mode, and, when the command is a data read command, is adapted to provide a read control signal decrypted by the command decryption means (131) to the memory core section (11), and to provide the command given through the command decryption circuit (131) as a read address to the memory core section (11); and
an operating mode control means (134) selecting the first operating mode for enabling said command decryption function of said command decryption means (131) and disabling said scrambling function of said scrambling means (133), in case the judgment means (132) judges that the command provided from said information processing apparatus (1) is said first command, and selecting the second operating mode for enabling said scrambling function of said scrambling means (133) and disabling said command decryption function of said command decryption means (131), in case the judgment means (132) judges that the command provided from said information processing apparatus (1) is said second command,
wherein said memory control means (13, 13B) includes a register (135) for setting a scrambling condition of said scrambling means (133), and
wherein said operating mode control means (134) updates the contents of said register (135) during an operation in said first operating mode.

2. The semiconductor memory device (10, 10B) according claim 1,
wherein said semiconductor memory device (10, 10B) being controlled by a command provided from said information processing apparatus (1) so that a period of operation in said second operating mode is longer than a period of operation in said first operating mode.

3. The semiconductor memory device (10B) according to claim 2,
wherein said operating mode control means (134) enables the descrambling function of said descrambling means (136) when said second operating mode is selected.

4. The semiconductor memory device (10, 10B) according to any one of claims 1 to 3,
wherein said input/output terminal section (12) includes a predetermined number of terminals which are used as both said command input terminals and said data output terminals by switching therebetween in a time-sharing manner.

5. The semiconductor memory device (10, 10B) according to claim 1,
wherein said memory control means (13, 13B) includes a register (135) for setting a scrambling condition of said scrambling means (133), and
wherein said operating mode control means (134) updates the contents of said register (135) during an operation in said first operating mode.

6. The semiconductor memory device (10, 10B) according to any one of claims 1 to 5,
wherein said semiconductor memory device (10, 10B) being controlled by a command provided from said information processing apparatus (1) so that a period of operation in said second operating mode is longer than a period of operation in said first operating mode.

## Patentansprüche

1. Halbleiterspeichervorrichtung (10, 10B), die entfernbar an einer Informationsverarbeitungsvorrichtung (1) montiert ist und die aufweist:
einen Speicherkernabschnitt (11) zum Speichern von Daten, die ein zu schützendes Programm enthalten, wobei der Speicherkernabschnitt (11) einen Adresseingabeabschnitt und einen Datenausgabeabschnitt enthält;
einen Eingabe-/Ausgabeanschlussabschnitt (12), der Befehlseingabeanschlüsse zum Empfangen eines Befehls von der Informationsverarbeitungsvorrichtung (1), der einen Anweisungscode und Adressdaten enthält, und Datenausgabeanschlüsse zum Bereitstellen von Daten, die von dem Speicherkernabschnitt (11) gelesen werden, für die Informationsverarbeitungsvorrichtung (1) enthält; und
eine Speichersteuereinrichtung (13, 13B), die zwischen dem Speicherkernabschnitt (11) und dem Eingabe-/Ausgabeanschlussabschnitt (12) geschaltet ist,
wobei die Speichersteuereinrichtung (13, 13B) enthält:
eine Befehlsbeurteilungseinrichtung (132);
eine Befehlsentschlüsselungseinrichtung (131), die eine Entschlüsselungsfunktion aufweist, wobei die Befehlsentschlüsselungseinrichtung (131) ausgelegt ist, in einem Fall, in dem die Entschlüsselungsfunktion freigegeben ist, den Befehl, der den Befehlseingabeanschlüssen bereitgestellt wird, zu entschlüsseln und den entschlüsselten Befehl an die Befehlsbeurteilungseinrichtung (132) auszugeben, oder in einem Fall, in dem die Entschlüsselungsfunktion gesperrt ist, den intakten Befehl durch eine Durchreichleitung an die Befehlsbeurteilungseinrichtung (132) durchzureichen;
eine Scrambling-Einrichtung (133), die eine Scrambling-Funktion aufweist, wobei die Scrambling-Einrichtung (133) ausgelegt ist, in einem Fall, in dem die Scrambling-Funktion freigegeben ist, die Daten, die aus dem Speicherkernabschnitt (11) gelesen werden, zu scrambeln und die gescrambelten Daten an einen Eingabe-/Ausgabeterminalabschnitt (12) auszugeben, oder in einem Fall, in dem die Scrambling-Funktion gesperrt ist, die intakten Daten durch eine Durchreichleitung an den Eingabe-/Ausgabeanschlussabschnitt (12) durchzureichen;
wobei die Befehlsbeurteilungseinrichtung (132) ausgelegt ist, zu beurteilen, ob der Befehl, der von der Informationsverarbeitungsvorrichtung (1) bereitgestellt wird, ein erster Befehl ist, der einen Übergang in einen ersten Betriebsmodus spezifiziert, oder ein zweiter Befehl ist, der einen Übergang in einen zweiten Betriebsmodus spezifiziert, und wenn der Befehl ein Datenlesebefehl ist, ausgelegt ist, ein Lesesteuersignal, das von der Befehlsentschlüsselungsvorrichtung entschlüsselt wurde, für den Speicherkernabschnitt (11) bereitzustellen, und den Befehl, der durch die Befehlsentschlüsselungsschaltung (131) gegeben wird, als Leseadresse für den Speicherkernabschnitt (11) bereitzustellen; und
eine Betriebsmodussteuereinrichtung (134), die den ersten Betriebsmodus zum Freigeben der Befehlsentschlüsselungsfunktion der Befehlsentschlüsselungseinrichtung (131) und zum Sperren der Scrambling-Funktion der Scrambling-Einrichtung (133) in einem Fall auswählt, in dem die Beurteilungseinrichtung (132) beurteilt, dass der Befehl, der von der Informationsverarbeitungsvorrichtung (1) bereitgestellt wird, der erste Befehl ist, und die den zweiten Betriebsmodus zum Freigeben der Scrambling-Funktion der Scrambling-Einrichtung (133) und zum Sperren der Befehlsentschlüsselungsfunktion der Befehlsentschlüsselungseinrichtung (131) in einem Fall auswählt, in dem die Beurteilungseinrichtung (132) beurteilt, dass der Befehl, der von der Informationsverarbeitungsvorrichtung (1) bereitgestellt wird, der zweite Befehl ist,
wobei die wobei die Speichersteuereinrichtung (13, 13B) ein Register (135) zum Einstellen einer Scrambling-Bedingung der Scrambling-Einrichtung (133) enthält, und
wobei die Betriebsmodussteuereinrichtung (134) die Inhalte des Registers (135) während eines Betriebs in dem ersten Betriebsmodus aktualisiert.

2. Halbleiterspeichervorrichtung (10, 10B) nach Anspruch 1,
wobei die Halbleiterspeichervorrichtung (10, 10B) durch einen Befehl gesteuert wird, der von der Informationsverarbeitungsvorrichtung (1) bereitgestellt wird, sodass eine Periode eines Betriebs in dem zweiten Betriebsmodus länger als eine Periode eines Betriebs in dem ersten Betriebsmodus ist.

3. Halbleiterspeichervorrichtung (10B) nach Anspruch 2,
wobei die Betriebsmodussteuereinrichtung (134) die Descrambling-Funktion der Descrambling-Einrichtung (136) freigibt, wenn der zweite Betriebsmodus ausgewählt wird.

4. Halbleiterspeichervorrichtung (10, 10B) nach einem der Ansprüche 1 bis 3,
wobei der Eingabe-/Ausgabeanschlussabschnitt (12) eine vorbestimmte Anzahl von Anschlüssen enthält, die sowohl als die Befehlseingabeanschlüsse als auch als die Datenausgabeanschlüsse durch zeitgeteiltes Wechseln zwischen diesen verwendet werden.

5. Halbleiterspeichervorrichtung (10, 10B) nach Anspruch 1,
wobei die Speichersteuereinrichtung (13, 13B) enthält:
ein Register (135) zum Einstellen einer Scrambling-Bedingung der Scrambling-Einrichtung (133), und
wobei die Betriebsmodussteuereinrichtung (134) die Inhalte des Registers (135) während eines Betriebs in dem ersten Betriebsmodus erneuert.

6. Halbleiterspeichervorrichtung (10, 10B) nach einem der Ansprüche 1 bis 5,
wobei die Halbleiterspeichervorrichtung (10, 10B) durch einen Befehl gesteuert wird, der von der Informationsverarbeitungsvorrichtung (1) bereitgestellt wird, sodass eine Periode eines Betriebs in dem zweiten Betriebsmodus länger als eine Periode eines Betriebs in dem ersten Betriebsmodus ist.

## Revendications

1. Dispositif de mémoire à semi-conducteurs (10, 10B) monté de façon amovible sur un appareil de traitement d'informations (1), comprenant :
une section de noyau de mémoire (11) permettant de stocker des données incluant un programme à protéger, ladite section de noyau de mémoire (11) incluant une section d'entrée d'adresse et une section de sortie de données ;
une section de borne d'entrée/sortie (12) incluant des bornes d'entrée d'ordre permettant de recevoir un ordre incluant un code d'instruction et des données d'adresse dudit appareil de traitement d'informations (1), et des bornes de sortie de données permettant de fournir des données lues dans ladite section de noyau de mémoire (11) audit appareil de traitement d'informations (1) ; et
un moyen de commande de mémoire (13, 13B) connecté entre ladite section de noyau de mémoire (11) et ladite section de borne d'entrée/sortie (12),
dans lequel ledit moyen de commande de mémoire (13, 13B) inclut :
un moyen de jugement d'ordre (132) ;
un moyen de déchiffrement d'ordre (131) comprenant une fonction de déchiffrement d'ordre, le moyen de déchiffrement d'ordre (131) étant adapté pour déchiffrer l'ordre fourni auxdites bornes d'entrée d'ordre et délivrer en sortie l'ordre déchiffré au moyen de jugement d'ordre (132), dans le cas où la fonction de déchiffrement d'ordre est activée, ou pour passer l'ordre intact au moyen de jugement d'ordre (132) par une ligne de dérivation, dans le cas où la fonction de déchiffrement est désactivée ;
un moyen de brouillage (133) comprenant une fonction de brouillage des données, le moyen de brouillage (133) étant adapté pour brouiller les données lues dans ladite section de noyau de mémoire (11) et délivrer en sortie les données brouillées à une section de borne d'entrée/sortie (12), dans le cas où la fonction de brouillage des données est activée, ou pour passer les données intactes à la section de borne d'entrée/sortie (12) par une ligne de dérivation, dans le cas où la fonction de brouillage des données est désactivée ;
dans lequel ledit moyen de jugement d'ordre (132) est adapté pour juger si l'ordre fourni depuis ledit appareil de traitement d'informations (1) est un premier ordre spécifiant une transition vers un premier mode de fonctionnement ou un second ordre spécifiant une transition vers un second mode de fonctionnement et, lorsque l'ordre est un ordre de lecture de données, est adapté pour fournir un signal de commande de lecture déchiffré par le moyen de déchiffrement d'ordre (131) à la section de noyau de mémoire (11), et pour fournir l'ordre donné par le circuit de déchiffrement d'ordre (131) comme une adresse de lecture à la section de noyau de mémoire (11) ; et
un moyen de commande de mode de fonctionnement (134) sélectionnant le premier mode de fonctionnement pour activer ladite fonction de déchiffrement d'ordre dudit moyen de déchiffrement d'ordre (131) et désactiver ladite fonction de brouillage dudit moyen de brouillage (133), dans le cas où le moyen de jugement (132) juge que l'ordre fourni par ledit appareil de traitement d'informations (1) est ledit premier ordre, et sélectionner le second mode de fonctionnement permettant d'activer ladite fonction de brouillage dudit moyen de brouillage (133) et de désactiver ladite fonction de déchiffrement d'ordre dudit moyen de déchiffrement d'ordre (131), dans le cas où le moyen de jugement (132) juge que l'ordre fourni par ledit appareil de traitement d'informations (1) est ledit second ordre
dans lequel ledit moyen de commande de mémoire (13, 13B) inclut un registre (135) permettant d'établir une condition de brouillage dudit moyen de brouillage (133), et
dans lequel ledit moyen de commande de mode de fonctionnement (134) met à jour le contenu dudit registre (135) pendant un fonctionnement dans ledit premier mode de fonctionnement.

2. Dispositif de mémoire à semi-conducteurs (10, 10B) selon la revendication 1,
dans lequel ledit dispositif de mémoire à semi-conducteurs (10, 10B) est commandé par un ordre fourni par ledit appareil de traitement d'informations (1) de sorte qu'une période de fonctionnement dans ledit second mode de fonctionnement soit plus longue qu'une période de fonctionnement dans ledit premier mode de fonctionnement.

3. Dispositif de mémoire à semi-conducteurs (10B) selon la revendication 2,
dans lequel ledit moyen de commande de mode de fonctionnement (134) active la fonction de désembrouillage dudit moyen de désembrouillage (136) lorsque ledit second mode de fonctionnement est sélectionné.

4. Dispositif de mémoire à semi-conducteurs (10, 10B) selon l'une quelconque des revendications 1 à 3,
dans lequel ladite section de borne d'entrée/sortie (12) inclut un nombre prédéterminé de bornes qui sont utilisées à la fois comme lesdites bornes d'entrée d'ordre et lesdites bornes de sortie de données par commutation entre elles de manière partagée dans le temps.

5. Dispositif de mémoire à semi-conducteurs (10, 10B) selon la revendication 1,
dans lequel ledit moyen de commande de mémoire (13, 13B) inclut
un registre (135) permettant d'établir une condition de brouillage dudit moyen de brouillage (133), et
dans lequel ledit moyen de commande de mode de fonctionnement (134) met à jour le contenu dudit registre (135) pendant un fonctionnement dans ledit premier mode de fonctionnement.

6. Dispositif de mémoire à semi-conducteurs (10, 10B) selon l'une quelconque des revendications 1 à 5,
dans lequel ledit dispositif de mémoire à semi-conducteurs (10, 10B) est commandé par un ordre fourni par ledit appareil de traitement d'informations (1) de sorte qu'une période de fonctionnement dans ledit second mode de fonctionnement soit plus longue qu'une période de fonctionnement dans ledit premier mode de fonctionnement.
